# FASCICULE DE BREVET EUROPEEN

(11) **EP 2 550 103 B1**
(45) Date de publication et mention de la délivrance du brevet: **08.05.2019**
(21) Numéro de dépôt: 11719295.5
(22) Date de dépôt: 23.03.2011
(51) Int. Cl.: B01J 49/00

(54) **COMPOSITION POUR LA RÉGÉNÉRATION DES RÉSINES**
ZUSAMMENSETZUNG ZUR REGENERIERUNG VON HARZEN
COMPOSITION FOR REGENERATING RESINS

(30) Priorité: 23.03.2010 FR 1052087
(43) Date de publication de la demande: 30.01.2013
(73) Titulaire: Compagnie des Salins du Midi et Salines de l'Est, 92300 Levallois-Perret (FR)
(72) Inventeur: BROQUET, Laurent, 34070 Montpellier (FR); GUIZA, Khier, 92150 Suresnes (FR)
(74) Mandataire: de la Bigne, Guillaume Michel Marie
(86) Numéro de dépôt international: PCT/FR2011/050613
(87) Numéro de publication internationale: WO 2011/117536

(56) Documents cités:
- EP-A1- 1 580 259
- EP-A2- 0 268 873
- FR-A1- 2 905 954
- US-A- 4 540 715
- US-A- 4 599 195
- US-A- 4 839 086
- US-A- 5 474 704
- US-B1- 6 331 261
- John Hibbs: "Anionic Surfactants" In: Richard J. Farn: "Chemistry and technology of Surfactants", 2006, Blackwell Publishing Ltd, XP002603508, ISBN: 9781405126960 pages 91-132, page 126 - page 127

## Description

La présente invention concerne une composition pour la régénération des résines, en particulier des résines échangeuses de cations utilisées dans les adoucisseurs d'eau. La présente invention concerne également un procédé de préparation de cette composition ainsi que son utilisation pour l'entretien des résines échangeuses de cations utilisées dans les adoucisseurs d'eau potable.

Les adoucisseurs d'eau sont des appareils permettant de réduire la dureté de l'eau grâce à une résine échangeuse de cations, remplaçant les ions calcium et/ou magnésium présents dans l'eau par les ions alcalins tel que les ions sodium ou potassium, présents sur la résine.

Lorsque tous les ions alcalins sont consommés, il est nécessaire de régénérer la résine. Il s'agit d'éliminer tous les ions calcium, magnésium et tous autres cations fixés sur la résine et de les remplacer par des ions alcalins. Cette étape est réalisée en faisant passer sur la résine une eau saturée en ions alcalins appelée saumure.

La régénération de la résine a cependant des limites dans la mesure où elle ne permet pas de retirer la totalité des ions calcium ainsi que certaines impuretés présentes dans l'eau à traiter et en particulier certains ions tels que les ions fer, aluminium, plomb, cuivre ou zinc. Ces impuretés détériorent la résine au fur et à mesure de leur accumulation, provoquant une diminution de la capacité de la résine à adoucir l'eau.

Il existe sur le marché des compositions liquides ou solides, de régénération pour résine d'adoucisseur d'eau comportant un chlorure de métal alcalin avec un agent séquestrant les ions fer, tel que l'acide citrique ou les citrates de métaux alcalins. Certaines de ces compositions comportent également des agents détergents visant à améliorer le nettoyage de la résine par la saumure de régénération. Par exemple les brevets US4540715 et US6331261 décrivent l'utilisation d'un mélange de composés alkyl diphényle oxydes disulfonés en tant que surfactant anionique.

Les inventeurs ont établi qu'une combinaison spécifique d'ingrédients permettait d'obtenir une amélioration notable de la régénération des résines échangeuses de cations, en particulier des résines pour adoucisseurs d'eau.

La composition selon l'invention comporte :
- 0,003 à 0,02% en poids d'un acide alkyléthercarboxylique de formule (I) ou d'un sel soluble dans l'eau dudit acide:

   R-O(CH₂-CH₂O)n-CH₂-COOH Formule (I)

   dans laquelle R est une chaîne alkyle de 3 à 9 atomes de carbone et n est un entier compris entre 1 et 9,
- 0,05 à 0,1% en poids de citrate de métal alcalin, et
- plus de 98% en poids d'un chlorure de métal alcalin,
les pourcentages en poids étant donnés par rapport au poids total de la composition.

Avantageusement, R est une chaîne alkyle de 4 à 8 atomes de carbones, et plus particulièrement, de 4, 6 ou 8 atomes de carbone et n est un entier compris entre 1 et 8.

Le sel soluble de l'acide alkyléthercarboxylique de formule (I) est choisi parmi le sel de sodium ou de potassium.

Préférentiellement, l'acide alkyléthercarboxylique est présent dans la composition à une teneur de 0,004 à 0,015% en poids, plus préférentiellement de 0,005 à 0,01% en poids et est choisi parmi le groupe constitué par l'acide carboxylique capryleth-9, l'acide carboxylique capryleth-6, l'acide carboxylique buteth-2, l'acide carboxylique hexeth-4 ou leurs mélanges.

Cette combinaison spécifique d'ingrédients permet d'obtenir une très bonne régénération de la résine concernant les ions calcium et magnésium, tout en améliorant notablement la décontamination de la résine en ce qui concerne d'autres ions, en particulier les ions plomb, fer, aluminium, cuivre et zinc (voir les exemples 2 à 7). Une utilisation régulière de la composition selon l'invention permet de protéger la résine de sa détérioration, d'améliorer sa durée de vie et sa capacité d'adoucissement de l'eau.

De préférence, le chlorure de métal alcalin est présent à plus de 99% en poids dans la composition, préférentiellement à plus de 99,5% en poids et est choisi parmi le chlorure de sodium et le chlorure de potassium.

Ce chlorure de métal alcalin présente en particulier les caractéristiques suivantes :
- teneur minimale en composés alcalino-terreux, par exemple la teneur en magnésium peut être inférieure à 5 mg/kg, voire à 3 mg/kg et/ou la teneur en calcium peut être inférieure à 500 mg/kg, voire à 250 mg/kg,
- très faible teneur en matières insolubles dans l'eau, en particulier une teneur inférieure à 50 mg/kg, notamment inférieure à 30 mg/kg,
- très faible teneur en matières organiques oxydables,
- très faible teneur en fer et cuivre, en particulier pour prévenir les risques d'encrassement. Par exemple, la teneur en fer peut être inférieure à 3 mg/kg et la teneur en cuivre inférieure à 2 mg/kg.
Ces teneurs sont données en mg par kg de chlorure de métal alcalin.

On entend par « très faible teneur » au sens de la présente invention une teneur inférieure ou égale à 200 mg/kg, notamment inférieure ou égale à 100 mg/kg.

Avantageusement, le citrate de métal alcalin est présent dans la composition à une teneur de 0,055 à 0,095% en poids, préférentiellement 0,06 à 0,09% en poids et est choisi parmi le citrate de sodium (citrate monosodique, citrate disodique, citrate trisodique) et le citrate de potassium. De préférence, le citrate de métal alcalin est le citrate trisodique dihydraté.

La composition selon l'invention peut comporter en outre d'autres additifs tels que des agents assainissants ou biocides. Plus particulièrement, les inventeurs ont noté qu'un précurseur de peroxyde d'hydrogène sous forme solide, permettait d'obtenir une action assainissante complémentaire.

Selon un mode de réalisation préféré de l'invention, la composition se présente sous forme solide, en particulier sous forme de galets, comprimés, blocs, pilules, pastilles, compacts, agglomérés ou granulés. Ces formes solides peuvent être obtenues par compression du mélange.

La forme solide de la composition offre plusieurs avantages, parmi lesquels on peut citer :
- l'amélioration de la conservation de cette composition, en particulier par rapport à la forme liquide,
- une bonne homogénéité,
- une bonne sécurité, notamment vis-à-vis de l'ingestion accidentelle ou involontaire par des enfants,
- une incorporation aisée de composants même en très faible quantité, et
- un dosage facile pour l'utilisateur.

L'invention divulgue également un procédé de préparation de la composition selon l'invention par mélange de plus de 98% en poids d'un chlorure de métal alcalin avec :
- 0,003 à 0,02% en poids d'un acide alkyléthercarboxylique de formule (I) ou d'un sel soluble dans l'eau dudit acide:

   R-O(CH₂-CH₂O)n-CH₂-COOH Formule (I)

   dans laquelle R est une chaîne alkyle de 3 à 9 atomes de carbone et n est un entier compris entre 1 et 9, et
- 0,05 à 0,1% en poids de citrate de métal alcalin,
les pourcentages en poids étant donnés par rapport au poids total de la composition.

Toutefois, l'introduction de faible quantité d'un ingrédient de texture visqueuse tel que l'acide d'alkyléthercarboxylique dans du chlorure de métal alcalin pulvérulent s'est avéré être une étape délicate. Les inventeurs ont donc proposé un procédé en deux étapes permettant d'obtenir un dosage adéquat et une bonne homogénéité de la composition finale. Ce procédé de préparation en deux étapes comporte une première étape de préparation d'un pré-mélange puis une seconde étape d'incorporation dudit pré-mélange à un sel de métal alcalin.

Plus particulièrement, le procédé comporte les étapes suivantes :
- réalisation d'un pré-mélange comportant de l'acide alkyléthercarboxylique de formule (I) ou un sel soluble dans l'eau dudit acide, du citrate de métal alcalin, un éventuel additif et un chlorure de métal alcalin, et
- incorporation du pré-mélange à un chlorure de métal alcalin.

Ce procédé permet d'obtenir une très bonne homogénéité. Cette homogénéité est particulièrement importante lorsque l'on souhaite mettre la composition sous forme de pastille. L'absence d'homogénéité provoque en effet des difficultés lors du pastillage de la composition.

Avantageusement, le pré-mélange comporte :
- 0,25% à 0,5% en poids d'un l'acide alkyléthercarboxylique de formule (I) ou d'un sel soluble dans l'eau dudit acide:

   R-O(CH₂-CH₂O)ₙ-CH₂-COOH Formule (I)

   dans laquelle R est une chaîne alkyle de 3 à 9 atomes de carbone et n est un entier compris entre 1 et 9,
- 2,5 à 5% en poids de citrate de métal alcalin, et
- de 90 à 97,25% en poids d'un chlorure de métal alcalin,
les pourcentages en poids étant donnés par rapport au poids du pré-mélange.

Préférentiellement, le pré-mélange comporte :
- 0,275% à 0,475%, plus préférentiellement, 0,3% à 0,45% en poids de l'acide alkyléthercarboxylique de formule (I),
- 2,75% à 4,75%, plus préférentiellement, 3% à 4,5% en poids de citrate de métal alcalin, et
- de 92 à 97%, plus préférentiellement, 94% à 96% en poids d'un chlorure de métal alcalin.

Le pré-mélange tel que défini ci-avant entre également dans le champs de l'invention. L'invention vise également le procédé de préparation du pré-mélange par incorporation et mélange des différents ingrédients du pré-mélange tels que définis ci-dessus et l'utilisation de ce pré-mélange pour la préparation d'une composition destinée à la régénération des résines échangeuses de cations et en particulier des résines des adoucisseurs d'eau potable.

Avantageusement, lors de la seconde étape, le pré-mélange est incorporé à un pourcentage en poids de 1 à 10% préférentiellement de 1 à 8%, plus préférentiellement encore de 1 à 5%, au chlorure de métal alcalin, le pourcentage en poids étant donné par rapport au poids total de la composition finale ainsi obtenue. L'incorporation du pré-mélange au chlorure de métal alcalin s'effectue préférentiellement au moyen d'un mélangeur, par exemple au moyen d'un mélangeur à vis.

Les formes préférées de l'acide alkyléthercarboxylique de formule (I), du sel soluble dudit acide, du citrate de métal alcalin et du chlorure de métal alcalin sont tels que définis et choisis précédemment.

Selon un mode de réalisation préféré de l'invention, l'incorporation du pré-mélange est suivi d'une étape de pastillage de la composition finale obtenue.

La composition selon l'invention est particulièrement appropriée pour entretenir des résines échangeuses de cations et en particulier pour les résines des adoucisseurs d'eau potable.

L'invention couvre également un procédé de régénération des résines échangeuses de cations et en particulier des résines des adoucisseurs d'eau potable, par dissolution de la composition selon l'invention dans de l'eau jusqu'à saturation en NaCl et passage de cette eau sur la résine à traiter. Par « saturation en NaCl », on vise le seuil de solubilité du NaCl dans l'eau, c'est-à-dire environ 350g de NaCl par litre d'eau.
- L'invention sera mieux comprise à la lecture de la description qui va suivre, donnée uniquement à titre d'exemple.

### Exemple 1 : Fabrication d'une pastille selon l'invention

### 1. Protocole :

Plusieurs pastilles additivées selon l'invention sont réalisées :
Les ingrédients sont : sel raffiné (97,5% en poids) et prémix (2,5% en poids). Le prémix est constitué de sel raffiné, de 3,25% en poids de citrate de sodium et de 0,45% en poids d'Akypo® LF 2 (Kao Chemical), ce qui permet d'obtenir les teneurs finales suivantes dans les pastilles :
- 812,5 ppm en citrate de sodium,
- 112,5 ppm en Akypo® LF 2 (acide carboxylique polyoxyethylene(8) octyl ether également désigné sous le nom « Capryleth-9 carboxylic acid », de formule R(OC₂H₄)₈OCH₂COOH dans laquelle R est un alkyl en C8),
- qsp en NaCl.

Les pastilles fabriquées ont toutes un poids total de 20 g.

Dans le premier lot, avant pastillage, les 2,5% de prémix sont mélangés au sel de façon homogène. Dans le deuxième lot, les 2 ingrédients sont apportés directement dans la pastilleuse et de façon successive : une couche de sel, 2,5 % de prémix (soit 500 mg) et une couche de sel.

Le pastillage se fait par une presse de laboratoire, réglée sur une pression de 1 t / cm².

A la sortie de la pastilleuse, la résistance des pastilles est évaluée par une tentative de casse manuelle par une même personne, quelques secondes après la sortie de la presse.

### 2. Résultats :

Les pastilles fabriquées par couches d'ingrédients successives se cassent facilement selon une ligne qui correspond à l'apport du prémix entre les 2 couches de sel.

Par contre, les pastilles qui présentent la même composition mais dont le mélange est homogène présentent une excellente résistance à la cassure.

### Conclusion :

Ce test confirme que la bonne homogénéité de la composition à pastiller est impérative pour assurer la fabrication de pastilles solides, non seulement par la réalisation préalable d'un prémix mais également par l'incorporation homogène de ce prémix dans le sel à pastiller.

### Exemple 2 : Décrassage d'une résine chargée en ions calcium (Ca²⁺)

### 1. Matériel et méthode :

Préparation de la résine (Purolite® C100E) : La résine neuve est trempée durant 48 h dans de la saumure saturée, ce qui permet d'éliminer les éléments indésirables éventuellement présents. Ensuite, elle est rincée à l'eau osmosée pour éliminer le NaCl non fixé.

Contamination de la résine : La contamination se fait par trempage de la résine dans une solution dans laquelle le contaminant a été dissout. Le trempage dure 1 nuit. Pour la contamination en ions calcium, 4L de solution à 35g/L ont été préparés.

Rinçage de la résine : Après l'étape de trempage, la résine contaminée est rincée à l'eau osmosée plusieurs fois jusqu'à ce que l'eau de rinçage ne contienne plus que des traces de contaminants.

Régénération de la résine : La régénération a été réalisée sur 1 litre de résine et avec un demi-litre de saumure. En effet, les adoucisseurs utilisent généralement pour la régénération un volume de saumure qui est la moitié du volume de résine à régénérer. Les saumures ont été obtenues par dissolution de pastilles dans de l'eau, de manière à obtenir des saumures saturées en sel, c'est-à-dire à 315g de sel (NaCl) par litre de saumure.

Les pastilles suivantes ont été testées :
- une pastille comportant uniquement du NaCl (« pastille NaCl »),
- une pastille System Saver II commercialisée sous la marque Morton® et portant le marquage U.S. Patent N° 6,331,261, comportant du NaCl avec un agent séquestrant et un agent détergent (« pastille additivée ») et,
- une pastille selon l'invention.

La régénération se fait par un passage ascendant de la saumure au travers de la résine (débit de 0,2 l/ min). Après régénération, la saumure est récupérée par des prélèvements de 0,1L.

Analyses : Les prélèvements sont ensuite analysés pour connaître les concentrations en contaminants. Le dosage des ions calcium est réalisé par complexométrie (avec de l'EDTA).

### 2. Résultats :

Les résultats de l'encrassement de la résine après contamination et rinçage sont présentés dans le tableau 1 ci-dessous :

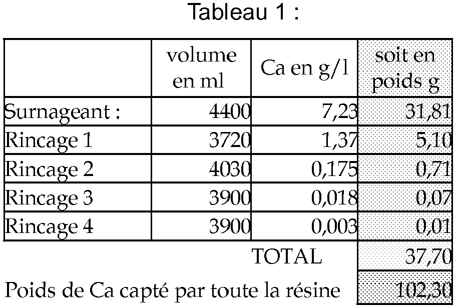

Les résultats de la régénération sont indiqués dans le tableau 2 ci-dessous :

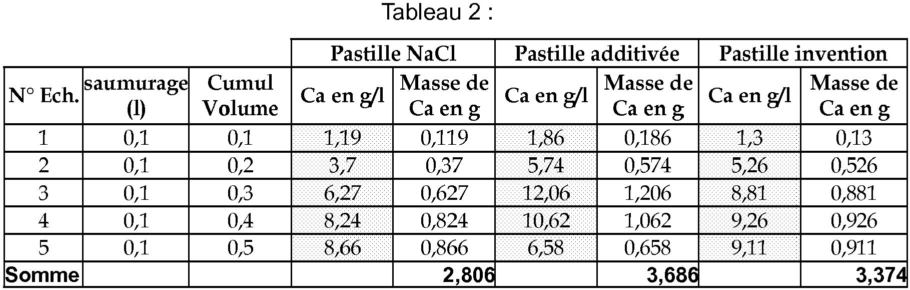

### Conclusion :

Concernant le décrassage en ions calcium de la résine, l'efficacité de la pastille selon l'invention est nettement meilleure que celle de la pastille de NaCl pur (environ 20% d'efficacité en plus). Toutefois, son efficacité est légèrement inférieure à celle de la pastille additivée (environ 8,5% d'efficacité en moins).

### Exemple 3 : Décrassage d'une résine chargée en ions aluminium (Al³⁺)

### 1. Matériel et méthode :

On procède comme à l'exemple 2.

Pour la contamination en ions aluminium, 3L de solution à 5g/L ont été préparés.

Le dosage des ions aluminium est réalisé par spectrométrie d'absorption atomique dans la flamme.

### 2. Résultats :

Les résultats de l'encrassement de la résine après contamination et rinçage sont présentés dans le tableau 3 ci-dessous :

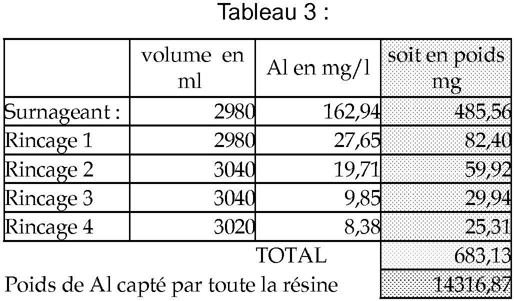

Les résultats de la régénération sont indiqués dans le tableau 4 ci-dessous :

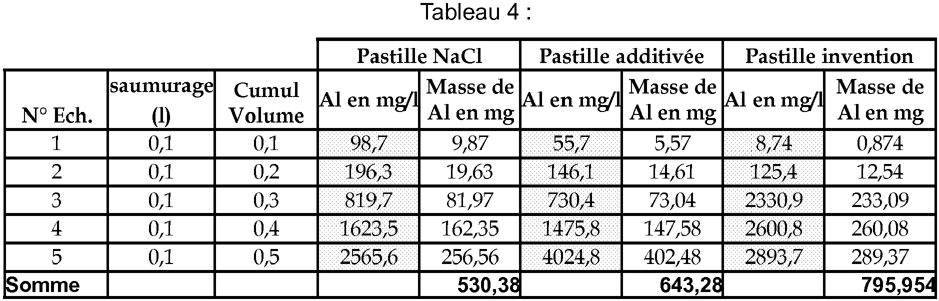

### Conclusion :

Concernant le décrassage en ions aluminium de la résine, l'efficacité de la pastille selon l'invention est nettement meilleure que celle de la pastille de NaCl pur (plus de 50% d'efficacité en plus) et à celle de la pastille additivée (plus de 20% d'efficacité en plus).

### Exemple 4 : Décrassage d'une résine chargée en ions plomb (Pb²⁺)

### 1. Matériel et méthode :

On procède comme à l'exemple 2.

Pour la contamination en ions plomb, 3L de solution à 5g/L ont été préparés.

Le dosage des ions plomb est réalisé par spectrométrie d'absorption atomique dans la flamme.

### 2. Résultats :

Les résultats de l'encrassement de la résine après contamination et rinçage sont présentés dans le tableau 5 ci-dessous :

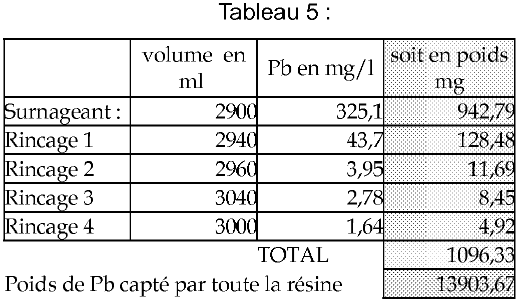

Les résultats de la régénération sont indiqués dans le tableau 6 ci-dessous :

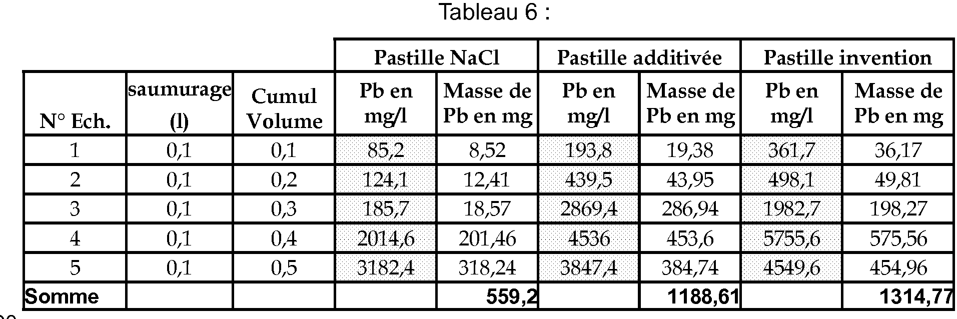

### Conclusion :

Concernant le décrassage en ions plomb de la résine, l'efficacité de la pastille selon l'invention est supérieure à celle de la pastille de NaCl pur (environ 135% d'efficacité en plus) et à celle de la pastille additivée (environ 10% d'efficacité en plus).

### Exemple 5 : Décrassage d'une résine chargée en ions fer (Fe²⁺)

### 1. Matériel et méthode :

On procède comme à l'exemple 2.

Pour la contamination en ions fer, 3L de solution à 5g/L ont été préparés.

Le dosage des ions fer est réalisé par spectrométrie d'absorption atomique dans la flamme.

### 2. Résultats :

Les résultats de l'encrassement de la résine après contamination et rinçage sont présentés dans le tableau 7 ci-dessous :

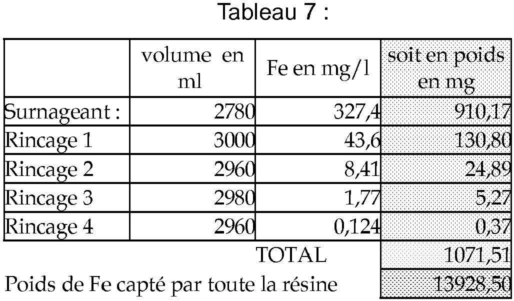

Les résultats de la régénération sont indiqués dans le tableau 8 ci-dessous :

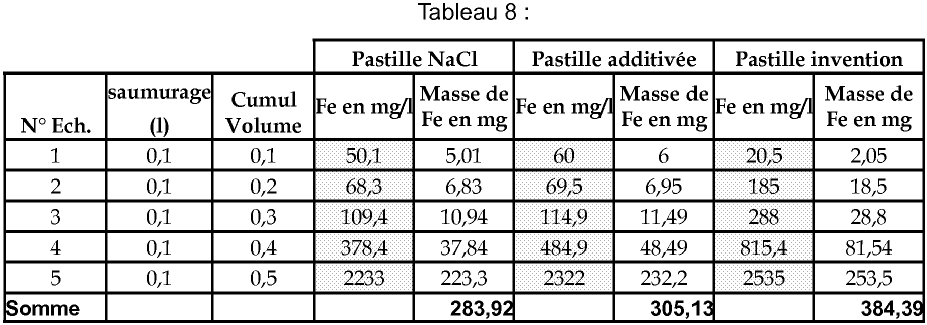

### Conclusion :

Concernant le décrassage en ions fer de la résine, l'efficacité de la pastille selon l'invention est supérieure à celle de la pastille de NaCl pur (environ 35% d'efficacité en plus) et à celle de la pastille additivée (plus de 25% d'efficacité en plus).

### Exemple 6 : Décrassage d'une résine chargée en ions cuivre (Cu²⁺)

### 1. Matériel et méthode :

On procède comme à l'exemple 2.

Pour la contamination en ions cuivre, 4L de solution à 5g/L ont été préparés.

Le dosage des ions cuivre est réalisé par spectrométrie d'absorption atomique dans la flamme.

### 2. Résultats :

Les résultats de l'encrassement de la résine après contamination et rinçage sont présentés dans le tableau 9 ci-dessous :

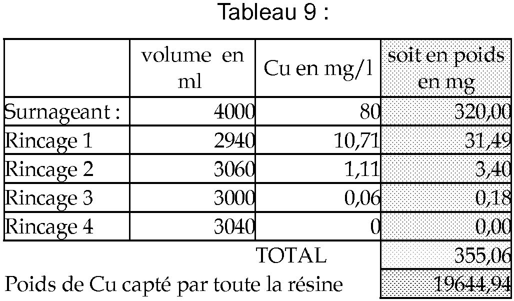

Les résultats de la régénération sont indiqués dans le tableau 10 ci-dessous :

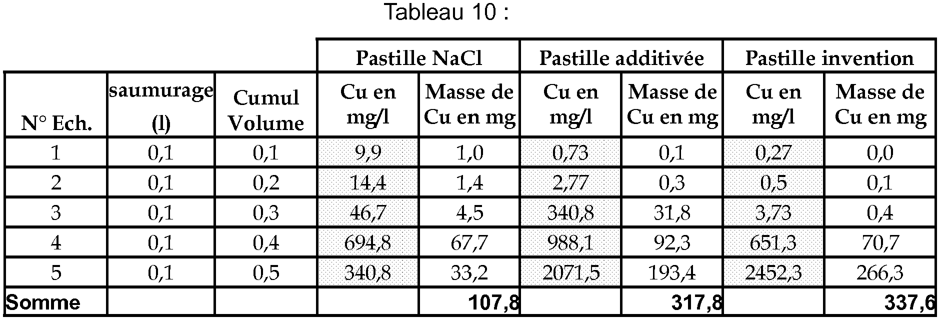

### Conclusion :

Concernant le décrassage en ions cuivre de la résine, l'efficacité de la pastille selon l'invention est très supérieure à celle de la pastille de NaCl pur (plus de 210% d'efficacité en plus) et légèrement supérieure à celle de la pastille additivée (plus de 6% d'efficacité en plus).

### Exemple 7 : Décrassage d'une résine chargée en ions zinc (Zn²⁺)

### 1. Matériel et méthode :

On procède comme à l'exemple 2.

Pour la contamination en ions zinc, 4L de solution à 5g/L ont été préparés.

Le dosage des ions zinc est réalisé par spectrométrie d'absorption atomique dans la flamme.

### 2. Résultats :

Les résultats de l'encrassement de la résine après contamination et rinçage sont présentés dans le tableau 11 ci-dessous :

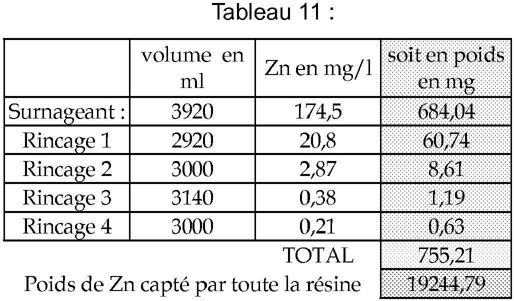

Les résultats de la régénération sont indiqués dans le tableau 12 ci-dessous :

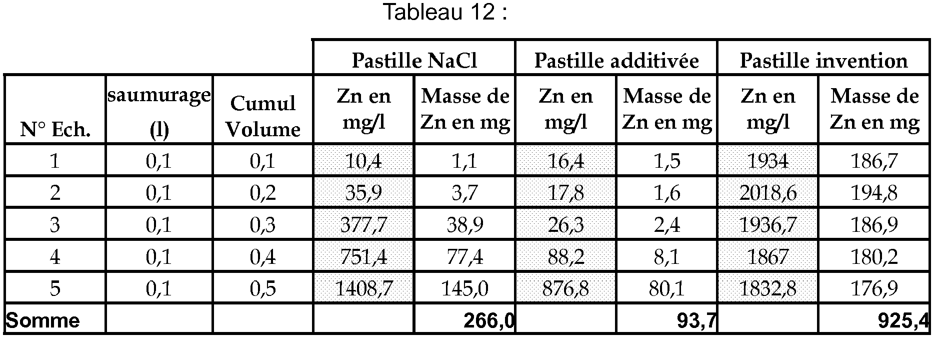

### Conclusion :

Concernant le décrassage en ions zinc de la résine, l'efficacité de la pastille selon l'invention est très supérieure à celle de la pastille de NaCl pur (plus de 245% d'efficacité en plus) et à celle de la pastille additivée (plus de 885% d'efficacité en plus).

## Revendications

1. Composition comportant:
- 0,003 à 0,02% en poids d'un acide alkyléthercarboxylique de formule (I) ou d'un sel soluble dans l'eau dudit acide :
R-O(CH₂-CH₂O)ₙ-CH₂-COOH Formule (I)
dans laquelle R est une chaîne alkyle de 3 à 9 atomes de carbone et n est un entier compris entre 1 et 9,
- 0,05 à 0,1% en poids de citrate de métal alcalin, et
- plus de 98% en poids d'un chlorure de métal alcalin,
les pourcentages en poids étant donnés par rapport au poids de la composition.

2. Composition selon la revendication 1, dans laquelle l'acide alkyléthercarboxylique est choisi parmi le groupe constitué par l'acide carboxylique capryleth-9, l'acide carboxylique capryleth-6, l'acide carboxylique buteth-2, l'acide carboxylique hexeth-4 ou leurs mélanges.

3. Composition selon la revendication 1 ou 2, dans laquelle le chlorure de métal alcalin est du chlorure de sodium et le citrate de métal alcalin est le citrate de sodium.

4. Composition selon l'une quelconque des revendications 1 à 3, sous forme solide en particulier sous forme de pastilles, galets, comprimés ou blocs.

5. Pré-mélange comportant :
- 0,25% à 0,5% en poids d'un l'acide alkyléthercarboxylique de formule (I) ou d'un sel soluble dans l'eau dudit acide :
R-O(CH₂-CH₂O)ₙ-CH₂-COOH Formule (I)
dans laquelle R est une chaîne alkyle de 3 à 9 atomes de carbone et n est un entier compris entre 1 et 9,
- 2,5 à 5% en poids de citrate de métal alcalin, et
- de 90 à 97,25% en poids d'un chlorure de métal alcalin,
les pourcentages en poids étant donnés par rapport au poids du pré-mélange.

6. Procédé de préparation de la composition selon l'une quelconque des revendications 1 à 4, comportant les étapes :
- réalisation d'un pré-mélange comportant de l'acide alkyléthercarboxylique de formule (I) ou un sel soluble dans l'eau dudit acide, du citrate de métal alcalin, un éventuel additif et un chlorure de métal alcalin et
- incorporation du pré-mélange à un chlorure de métal alcalin.

7. Procédé selon la revendication 6, dans lequel un pré-mélange selon la revendication 5 est réalisé.

8. Procédé selon la revendication 6 ou 7, dans lequel le pré-mélange est incorporé à un pourcentage en poids de 1 à 10% au chlorure de métal alcalin, le pourcentage en poids étant donné par rapport au poids total de la composition.

9. Utilisation de la composition selon l'une quelconque des revendications 1 à 4, pour l'entretien des résines échangeuses de cations, en particulier pour les résines des adoucisseurs d'eau potable.

## Patentansprüche

1. Zusammensetzung, umfassend:
- 0,003 bis 0,02 Gew.-% einer Alkylethercarbonsäure der Formel (I) oder eines wasserlöslichen Salzes der Säure:
R-O(CH₂-CH₂O)ₙ-CH₂-COOH Formel (I)
wobei R eine Alkylkette mit 3 bis 9 Kohlenstoffatomen ist und n eine ganze Zahl zwischen 1 und 9 ist,
- 0,05 bis 0,1 Gew.- % Alkalimetallcitrat und
- mehr als 98 Gew.-% eines Alkalimetallchlorids,
wobei die prozentualen Gewichtsanteile relativ zu dem Gewicht der Zusammensetzung angegeben sind.

2. Zusammensetzung nach Anspruch 1, wobei die Alkylethercarbonsäure ausgewählt ist aus der Gruppe bestehend aus Capryleth-9-Carbonsäure, Capryleth-6-Carbonsäure, Buteth-2-Carbonsäure, Hexeth-4-Carbonsäure oder deren Gemischen.

3. Zusammensetzung nach Anspruch 1 oder 2, wobei das Alkalimetallchlorid Natrumchlorid ist und das Alkalimetallcitrat Natriumcitrat ist.

4. Zusammensetzung nach einem der Ansprüche 1 bis 3, in fester Form, insbesondere in Form von Plättchen, Rollen, Tabletten oder Blöcken.

5. Vormischung, umfassend:
- 0,25 Gew.-% bis 0,5 Gew.-% einer Alkylethercarbonsäure der Formel (I) oder eines wasserlöslichen Salzes der Säure:
R-O(CH₂-CH₂O)ₙ-CH₂-COOH Formel (I)
wobei R eine Alkylkette mit 3 bis 9 Kohlenstoffatomen ist und n eine ganze Zahl zwischen 1 und 9 ist,
- 2,5 bis 5 Gew.- % Alkalimetallcitrat und
- 90 bis 97,25 Gew.-% eines Alkalimetallchlorids,
wobei die prozentualen Gewichtsanteile relativ zu dem Gewicht der Vormischung angegeben sind.

6. Verfahren zur Herstellung der Zusammensetzung nach einem der Ansprüche 1 bis 4, umfassend die folgenden Schritte:
- Herstellen einer Vormischung, umfassend Alkylethercarbonsäure der Formel (I) oder ein wasserlösliches Salz der Säure, Alkalimetallcitrat, ein etwaiges Zusatzmittel und ein Alkalimetallchlorid, und
- Hineinmischen der Vormischung in ein Alkalimetallchlorid.

7. Verfahren nach Anspruch 6, bei dem eine Vormischung nach Anspruch 5 hergestellt wird.

8. Verfahren nach Anspruch 6 oder 7, bei dem die Vormischung zu einem Gewichtsanteil von 1 bis 10 % in das Alkalimetallchlorid hineingemischt wird, wobei der prozentuale Gewichtsanteil relativ zu dem Gesamtgewicht der Zusammensetzung angegeben ist.

9. Verwendung der Zusammensetzung nach einem der Ansprüche 1 bis 4 zur Konservierung der Kationenaustauscherharze, insbesondere für die Harze der Trinkwasserenthärter.

## Claims

1. Composition comprising:
- 0.003 to 0.02% by weight of an alkylethercarboxylic acid of formula (I) or of a water-soluble salt of said acid:
R-O(CH₂-CH₂O)ₙ-CH₂COOH Formula (I)
wherein R is an alkyl chain with 3 to 9 carbon atoms and n is an integer from 1 to 9,
- 0.05 to 0.1% by weight of a alkali metal citrate, and
- more than 98% by weight of an alkali metal chloride,
with the percentages by weight being given in relation to the weight of the composition.

2. Composition according to claim 1, wherein the alkylethercarboxylic acid is chosen from the group consisting of capryleth-9 carboxylic acid, capryleth-6 carboxylic acid, buteth-2 carboxylic acid, hexeth-4 carboxylic acid or mixtures thereof.

3. Composition according to claim 1 or 2, wherein the alkali metal chloride is sodium chloride and the alkali metal citrate is sodium citrate.

4. Composition according to any one of claims 1 to 3, in solid form in particular in the form of pellets, peebles, tablets or blocks.

5. Pre-mix comprising:
- 0.25% to 0.5% by weight of an alkyl ether carboxylic acid having formula (I) or of a water-soluble salt of said acid:
R-O(CH₂-CH₂O)ₙ-CH₂COOH Formula (1)
wherein R is an alkyl chain with 3 to 9 carbon atoms and n is an integer between 1 and 9,
- 2.5 to 5% by weight of alkali metal citrate, and
- from 90 to 97.25% by weight of an alkali metal chloride, with the percentages by weight being given in relation to the weight of the pre-mix.

6. Method for preparing the composition according to any one of claims 1 to 4, comprising the steps of:
- producing a pre-mix comprising alkylethercarboxylic acid of formula (I) or a water-soluble salt of said acid, an alkali metal citrate, a possible additive and an alkali metal chloride and
- incorporating the pre-mix into an alkali metal chloride.

7. Method according to claim 6, wherein a pre-mix according to claim 5 is produced.

8. Method according to claim 6 or 7, wherein the pre-mix is incorporated at a percentage by weight from 1 to 10% into the alkali metal chloride, with the percentage by weight being given in relation to the total weight of the composition.

9. Use of the composition according to any one of claims 1 to 4, for the maintenance of cation exchange resins, in particular for resins of drinking water softeners.
